# EUROPEAN PATENT SPECIFICATION

(11) **EP 1 230 167 B1**
(45) Date of publication and mention of the grant of the patent: **23.07.2003**
(21) Application number: 00911255.8
(22) Date of filing: 08.03.2000
(51) Int. Cl.: C02F 1/02, C02F 9/00, C05F 1/00, C05D 3/02, C02F 103/20

(54) **PROCESS FOR THE DISPOSAL OF SOLID OR LIQUID WASTES FROM TREATMENT OF ANIMAL SOURCE MATERIALS**
VERFAHREN FÜR DIE ENTSORGUNG VON FESTEN ODER FLÜSSIGEN RESTSTOFFEN AUS DER TIERVERARBEITUNGSINDUSTRIE
PROCEDE POUR ELIMINER DES DECHETS SOLIDES OU LIQUIDES PRODUITS LORS DU TRAITEMENT DE MATIERES D'ORIGINE ANIMALE

(30) Priority: 20.07.1999 IT VI990156
(43) Date of publication of application: 14.08.2002
(73) Proprietor: Sicit Chemitec S.P.A., 36072 Chiampo (VI) (IT)
(72) Inventor: NERESINI, Massimo, I-36078 Valdagno (IT)
(74) Representative: Bazzichelli, Alfredo
(86) International application number: IT0000077
(87) International publication number: WO01005707

(56) References cited:
- DE-A- 4 104 174
- US-A- 4 100 154
- US-A- 4 483 829

## Description

### Field of the invention

The present invention relates to a process for the disposal of solid or liquid wastes deriving from treatment operations of animal source materials, particularly those that have been subjected to treatments with common salt (sodium chloride) for preservation or other aims. Examples of such residues are those deriving from lime baths, soaking or desalting liquors, and in case from other solid-or liquid-phase tanning residues, as well as liquors loaded with organic matter deriving from fish processing plants, like tuna, anchovies offal and the like, as well as from meat processing plants, like butchery, tinning, feedstuff residues and the like.

The process according to the present invention allows to eliminate the dumping of highly polluting wastes, finally yielding three products: a solid product useful in agriculture, a peptide concentrate, useful in the agricultural and in the industrial field or destined to thermal destruction as alternative fuel, and salt (sodium chloride), reusable anew in the industrial processes, such as, e.g., in the hide tanning process.

### Prior art

As it is known, with particular reference to the hide processing industry, prior to the tanning steps the hides are beaten for salt recovery, then subjected to a soaking or desalting treatment with possible further washings, and subsequently subjected to a so-called «lime bath» (BDC) treatment in a markedly alkaline environment and using sodium sulphide and other substances, in order to ease the subsequent tanning steps, thus improving the final tannage quality. The liquor outlet from the lime baths is highly polluted in terms of COD, ranging from 15.000 to 40.000 mg/l, sulphides, ranging from 1.500 to 5.000 mg/l, and chlorides, ranging from 20.000 to 50.000 mg/l, and it is drained, after a possible separation of the solid phases (like, e.g., the undissolved hair), in the purifier of the canning plant itself or channeled to an external purifier, in order to be subjected to chemical-physical and biological purification treatments.

Currently adopted purification treatment methods provide the mere filtration with the recovery of the sulphur ion-containing liquors, the ultrafiltration, or, more simply, the acidification with acids, like sulphuric acid or hydrochloric acid, at a pH 3-6 (isoelectric point of the proteins contained in the lime pits), with or without heating, for a variable time and the subsequent filtration with recovery of an organic residue.

However, such treatment methods merely allow a reduction of the COD, of the TKN for the protein precipitation, the sulphide abatement, the water clarification, and, hence, only partially overcome the problems entailed in the lime pit purification; in particular, to date the problem entailed by the presence of high COD, TKN and chlorides, as well as the disposal of the resulting sludge, has not been overcome.

Moreover, several drawbacks and problems, entailed in the presence of the soaking, desalting, and lime liquors, and possibly of other washing liquors deriving from this first tanning stage, crop up during the purification treatment. Hereinafter such liquors will be referred to as «3DC». Among these drawbacks, a difficulty in the biological purification needs to be mentioned, due to the high amount of organic charge to be disposed, with the consequent accumulation of remarkable sludge amounts, as well as to the presence of significant sulphide amounts, that can entail problems, both odorous and of sulphate increase in the drained liquors.

The possible precipitation of not easily filterable metal sulphides entails further difficulties for a regular filtration.

Moreover, apparently the presence in high percentages of chlorides in the BDCs that are in no way separated during the chemical-physical and biological liquor purification treatment can yield a high chloride concentration also in the purified liquors themselves, causing the «chlorides» parameter to exceed the limit values set by the waste disposal provisions, thereby remarkably worsening the management of the entire purification plant.

Finally, other difficulties are caused by the direct draining of the BDCs into the purifier, e.g. the possible presence in the latter of bactericidal substances that obviously could inactivate the biological plant.

As already highlighted, also other drained liquors, deriving from the processing of materials of animal origin, including fish, have high contents of protein organic matter and of salts. Therefore, difficulties for the purification plants of such liquors might ensue, as the chloride concentration, not abated by the purification process, may exceed the legal limits set for the dumping of the purified liquors.

### Description of the Invention

For the sake of simplicity, in the following description particular reference will be made to the problems and to the overcoming of the problems related to lime pits, as a representative example of suitable material in a process according to the invention. To a person skilled in the art it will be apparent that also other waste materials highly polluted by organic residues and by sodium chloride could be treated according to the present invention.

An object of the present invention is that of implementing a process synergistically operating chemically and physically through BDCs treatment steps in order to recover products useful in the agricultural, livestock and industrial field. Among those, there are e.g. the clarification plasters, used as calcium soil conditioners for agriculture, or thermally treated as deriving from, and containing, proteins of animal origin, sterilized peptide concentrates useful in the livestock, agricultural or industrial field or possibly useful as alternative fuel for the production of steam reusable within the same manufacturing process, and, lastly and better characterizing the invention, a salt, sodium chloride (NaCl), obtained through the crystallization and the subsequent refining steps, to be used in the industrial field in general, and specifically to be recycled in the tanning plants during the pickling step.

A further object of the present invention, in the case of tanning plant wastes, is that of implementing a process in which not merely the BDCs as such, but also the BDCs admixed with the washing liquors used in the lime baths, as well as with all the offal of animal origin possibly pretreated and considered as residues or wastes by the tanning plants themselves or by companies operating in the field of the wastes of animal origin, like, e.g., fleshing, limed pieces, hair, tanning residues, as well as other treatable wastes of animal origin.

In that case, the BDCs themselves, as well as the BDCs admixed with any wastes of animal origin whatsoever are classified as «wastes of animal origin», therefore subject to the current European and Italian provisions.

Those objects are attained on one hand by applying to wastes of animal origin hydrolysis and chemical-physical separation processes, and, on the other hand, physical processes of ultrafiltration and reverse osmosis and/or evaporation, crystallization and refining of the sodium chloride, yielding a reusable protein concentrate and the sodium chloride, reusable as well. Such processes synergistically integrate thereamong, finally resulting not only in a waste liquor drainable in the known way, but also in recyclable products useful in the agricultural, livestock or thermal energy production fields, or even within the plant processing the material of animal origin itself, with an advantage in cost-effectiveness.

Operationally, the process according to the invention consists of two stages: a first stage, hereinafter referred to as «stage 1», comprising BDC treatment steps, developable through several technological paths, with the ultimate object of:
recovering peptide and/or inorganic sludge, destined to agricultural or industrial use, recovering the hydrogen sulphide in its various end products (sulphuric acid, to be reused in the steps of said stage 1 or possibly to be sold, ammonium sulphide, sodium bisulphite, calcium sulphate, sodium sulphide or sodium sulphydrate possibly recoverable in the tanning operations, etc.) and
producing a saline peptide liquor that is subsequently subjected to a second stage, the «stage 2». In this second stage the peptide concentrate and the sodium chloride are recovered by ultrafiltration and reverse osmosis and/or evaporation, salt crystallization and
refining processes, all obviously to be construed as an unitary production process.

Hence, the object of the present invention is a process for recovering NaCl and transforming an environmentally non-disposable solid or liquid waste into an environmentally disposable waste, in the treatment of a material of animal origin, which produces said non-disposable waste containing protein products of animal origin and products of saline nature,
characterized in that said products of saline nature comprise water, NaCl, CaO and sulphides and in that it comprises a first stage including the steps of:
hydrolyzing said protein products in order to obtain a saline peptide liquor; transforming CaO into CaCO₃ and sulfides into solid sulfur compounds and separating said solids to purify said saline peptide liquor; and
a second stage subsequent to said first stage, including the steps of: removing water from said purified saline liquor to form a liquid waste; and separating purified sodium chloride as an industrially useful product from said peptide liquor, and obtaining a useful or combustible peptide by product,
whereby, after said two consecutive treatment stages, said liquid waste shows a residual pollutant content low enough to be delivered to a standard purification plant, or directly to a dumping site.

A more specific object of the present invention is a process wherein said first treatment stage comprises the steps of: accumulating said protein products of animal origin in an aqueous saline suspension; hydrolyzing said suspension, continuously or in batches, in a markedly alkaline environment under conditions ranging from room temperature and atmospheric pressure to 160°C and under pressure in order to obtain said peptide liquor; separating the solids contained inside said liquor; decalcifying said liquor by reaction with carbon dioxide or other carbonates or bicarbonates for producing calcium carbonate; and separating the calcium carbonate from said liquor at a 5-11 pH, in order to obtain a limpid peptide liquor to feed to said second stage. More specifically, the second stage comprises the steps of: concentrating said saline peptide liquor by evaporation of a quantity of the solution water sufficient to obtain a pre-concentrate in which the salt concentration does not exceed that at the crystallization start; crystallizing the salt by a further solution water removal from said peptide liquor; and separating the crystallized salt from the peptide liquor in order to obtain said salt and said peptide concentrate.

Other embodiments of the invention are specified in the dependent claims.

### Brief description of the drawings

Those and other features of the present invention will be better highlighted through the description, given merely by way of example and without limitative purposes, of five application examples, four thereof experimental and carried cut in a laboratory and one thereof applicative of an industrial scale process, and with reference to the annexed drawings, wherein:
- Figures 1 to 4 depict, according to a block diagram, four different operational ways for carrying out the first stage of the process according to the invention;
- Figures 5 and 6 depict, according to a block diagram, two different operational ways for carrying out the second stage of the process according to the invention; and
- Figure 7 sketches a plant for carrying out the process according to the invention.

### Embodiments of the Invention

Description of the first stage, or «stage 1», of the process according to the invention:

To date, the art is aware of several methods leading to the recovery of a peptide and/or inorganic sludge, to the recovery of the developed hydrogen sulphide and to the production of a saline peptide liquor. Four such methods, selected among the most significant and economically feasible for the purpose, will hereinafter be described.

First way to carry out the «stage 1» of the process.

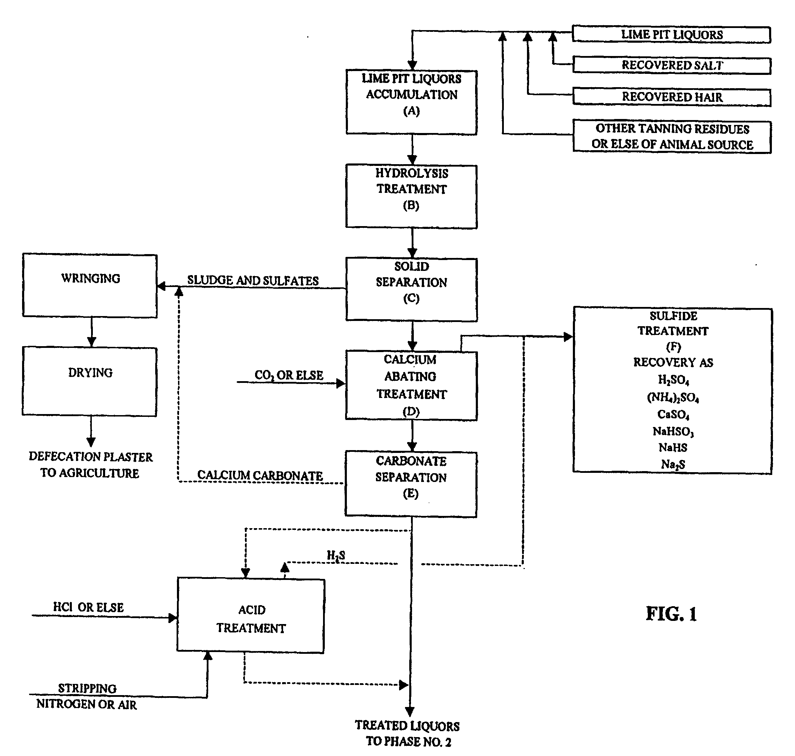

With reference to the block diagram of Fig. 1, the following sequential steps are illustrated:
a) accumulating the possibly admixed BDCs, with the salt recovered by hide beating, or already present in the BDCs themselves in case the beating step can be avoided in the tanning plant, with the recovered hair possibly already present - in the BDCs themselves, both dissolved or suspended, with other wastes of animal origin deriving from the tanning steps, or possibly from other steps, even unrelated to the tanning industry (e.g. meat flours, etc.)
b) hydrolyzing the BDCs, to which the suspension is fed into the reactor in batches, as well as continuously, where, exploiting the markedly alkaline environment of the BDCs themselves or casewise adding an alkali compound, a high temperature treatment under pressure is carried out (taking into account the existing laws in the field of animal origin waste processing, a 133°C 2 min 3 bar treatment can be envisaged; however, the hydrolysis process can possibly be carried out also at room temperature and not under pressure, lengthening at will the processing times thereof).
c) Separating the solids, after the hydrolysis treatment the alkali turbid is fed to a solid separation step (lime, calcium sulphate, traces of undissolved hair, etc.), in which the thermally treated peptide liquor, and subsequently, provided the steps are carried out according to the existing provisions concerning wastes of animal origin, sterilized as well, proceeds to the subsequent treatment, whereas the separated solid is fed to a possible pressing and drying process.
d) Decalcifying the peptide liquor, the liquor yielded by the process c) is fed into specific reactors in which carbon dioxide or other carbonates or bicarbonates are added in order to obtain calcium carbonate recoverable by itself or admixable to the previously obtained solids. This step is obtainable under hot as well as cold conditions. The step can be completed, before or after the calcium carbonate separating step, lowering the pH to 5-8 by the addition of hydrochloric acid or other suitable acids (preferably hydrochloric acid, as it produces recoverable sodium chloride) and with a subsequent air or Nitrogen scrubbing in order to completely develop the solution sulphides as hydrogen sulphide. The latter step (air or Nitrogen scrubbing) can also be carried out without acid addition. Such steps can be subsequent to the calcium carbonate separation, therefore operating onto the limpid saline liquor, as highlighted in the block diagram of FIG. 1.
e) Separating the calcium carbonate, the turbid with a 5-11 pH (average 7-8) is fed to a separation step of the calcium carbonate, that can be pressed and dried to be sold as such or admixed to the solid obtained from process c) and then casewise pressed and/or dried and sold in the agricultural field as soil conditioner or additive. This solid can also have livestock and industrial uses. The decalcified peptide liquor is accumulated and it is ready for stage 2 of the process object of the invention herein disclosed.
f) hydrogen sulphide treating, the gaseous flow containing the hydrogen sulphide of which at d) is subjected to suitable treatments aimed at the recovery thereof as sulphuric acid, calcium sulphate, ammonium sulphide, sodium bisulphite, sodium sulphide or sodium sulphydrate, etc.

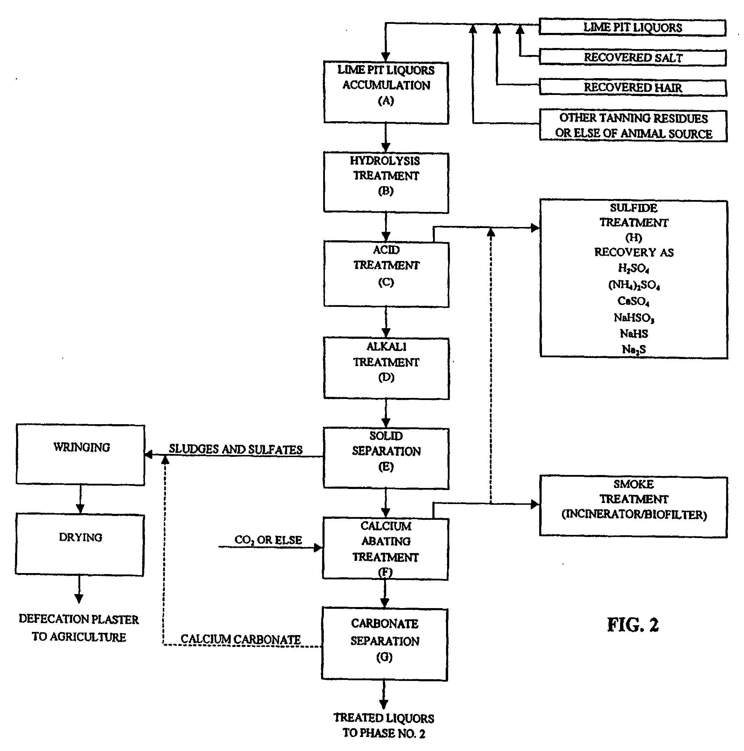

Second way to carry out the «stage 1» of the process. With reference to the block diagram of FIG. 2, the following sequential steps are illustrated:
a) accumulating the possibly admixed BDCs, with the salt recovered by hide beating or already present in the BDCs themselves in case the beating step can be avoided in the tanning plant, with the recovery hair that can already be present in the BDC themselves both dissolved or suspended, with other wastes of animal origin deriving from the tanning steps or possibly from other steps, even unrelated to the tanning industry (e.g., meat flours, etc.).
b) Hydrolyzing the BDCs, in which the suspension is reactor fed in batches as well as continuously, where, exploiting the markedly alkaline environment of the BDCs themselves or casewise adding an alkali compound, a high temperature treatment under pressure is carried out (taking into account the existing laws in the field of the animal origin waste processing, a 133°C 2 min 3 bar treatment can be envisaged; however, the hydrolysis process can possibly be carried out also at room temperature and not under pressure, lengthening the processing times at will).
c) acid treatment of the turbid, after the hydrolysis treatment, the alkali turbid is acidified with sulphuric acid or other in such an amount to lower the turbid pH to 0-6. The step can be carried out under hot or cold conditions, lasting for the time required for the elimination of the sulphides present in the solution as hydrogen sulphide. The step can be completed with the air or Nitrogen scrubbing in order to completely develop as hydrogen sulphide the sulphides present in the solution.
d) Alkali treatment of the turbid, the acidic turbid yielded from c) is treated with lime milk or other alkali compound in order to precipitate the previously added sulphuric acid or other as sulphate or other. This step can be carried out under hot or cold conditions (as acid in the standard process sulphuric acid is used, and lime as base, in order to obtain calcium sulphate, precipitating under high temperatures, mere traces thereof being left in the solution; moreover, the calcium sulphate is widely used in agriculture or in the industrial field).
e) Separating the solids, after the treatment of which at d) the alkali turbid is fed to a solid separation step (lime, calcium sulphate, traces of undissolved hair, etc.), in which the thermally treated, and subsequently, provided the steps are carried out according to the existing provisions regarding wastes of animal origin, sterilized as well, proceeds to the subsequent treatment, whereas the separated solid is fed to a possible pressing and drying process.
f) Decalcifying the peptide liquor, the liquor yielded from process e) is fed into specific reactors in which carbon dioxide or other carbonates or bicarbonates is added in order to obtain recoverable calcium carbonate by itself or admixable to the previously obtained solids. This step can be carried out under hot or cold conditions.
g) Separating the calcium carbonate, the turbid with a 5-8 pH (average 7-8) is fed to a separation step of the calcium carbonate that can be pressed and dried to be sold as such or admixed to the solid yielded by e) and then casewise pressed and/or dried and sold as soil conditioner or additive in the agricultural field. This solid can also have livestock and industrial uses. The decalcified peptide liquor is accumulated and it is ready for stage 2 of the process object of the invention herein disclosed.
h) Hydrogen sulphide treating, The gaseous flow containing the hydrogen sulphide of which at c) is subjected to suitable treatments aimed at the recovery thereof as sulphuric acid, calcium sulphate, ammonium sulphide, sodium bisulphite, sodium sulphide or sodium sulphydrate, etc.

Third way to carry out the «stage 1» of the process.

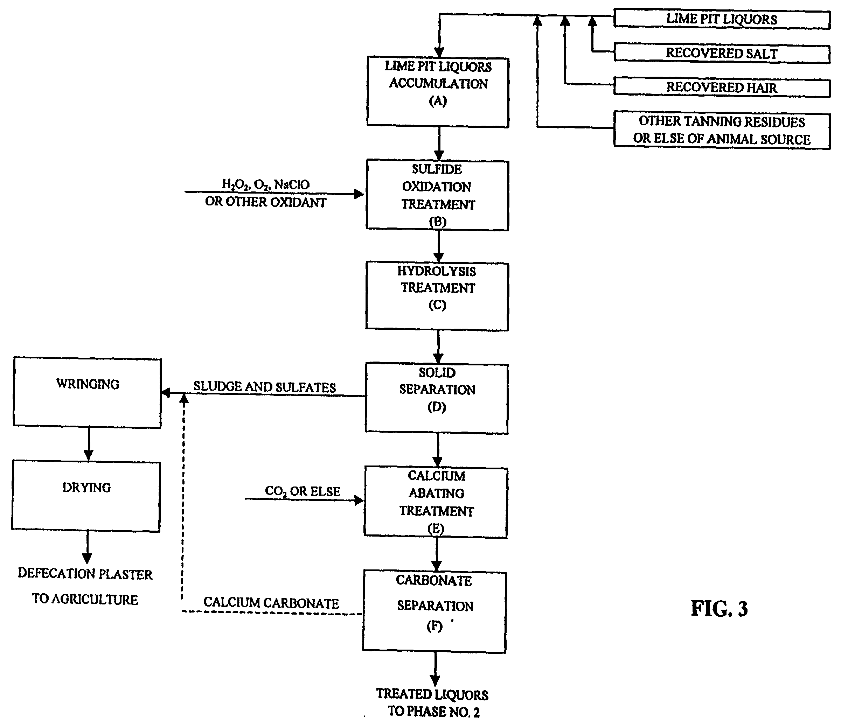

With reference to the block diagram di FIG. 3, the following sequential steps are illustrated:
a) accumulating the possibly admixed BDCs, with the salt recovered by hide beating or already present in the BDCs themselves in case the beating step can be avoided in the tanning plant, with the recovered hair that can already be present in the BDC themselves both dissolved or suspended, with other wastes of animal origin deriving from the tanning steps or possibly from other steps, even unrelated to the tanning industry (e.g. meat flours, etc.).
b) Oxidizing the sulphides, the sulphides dissolved in the BDCs are oxidized to thiosulphates and/or sulphates with a suitable oxidizing agent (e.g., hydrogen dioxide, pure oxygen, sodium hypochlorite, etc.) casewise adopting suitable catalysts. The temperature and the length of the process are functions of the oxidizing agent used.
c) Hydrolyzing the BDCs, in which the suspension is fed to reactors in batches as well as continuously, where, exploiting the markedly alkali environment of the BDCs themselves or casewise adding an alkali compound, a high temperature treatment under pressure is carried out (taking into account the existing laws in the field of animal origin waste processing a 133°C 2 min 3 bar treatment can be envisaged; however, the hydrolysis process can possibly be carried out also at room temperature and not under pressure, lengthening the processing times thereof at will).
d) Separating the solids, after the hydrolysis treatment the alkali turbid is fed to a solid separation step (lime, calcium sulphate, traces of undissolved hair, etc.), in which the thermally treated peptide liquor, and subsequently, provided the steps are carried out according to the existing provisions regarding wastes of animal origin, sterilized as well, proceeds to the subsequent treatment, whereas the separated solid is fed to a possible pressing and drying process.
e) Decalcifying the peptide liquor, the liquor yielded by the process d) is fed into specific reactors in which carbon dioxide or other carbonates o bicarbonates is added in order to obtain calcium carbonate recoverable by itself or admixable to the previously obtained solids. This step is obtainable under hot as well as cold conditions.
f) Separating the calcium carbonate, the turbid with a 5-8 pH (average 7-8) is fed to a separation step of the calcium carbonate that can be pressed and dried to be sold as such or admixed to the solid yielded by b) and then casewise pressed and/or dried and sold in the agricultural field as soil conditioner or additive. This solid can also have livestock and industrial uses. The decalcified peptide liquor is accumulated and it is ready for stage 2 of the process object of the invention herein disclosed.

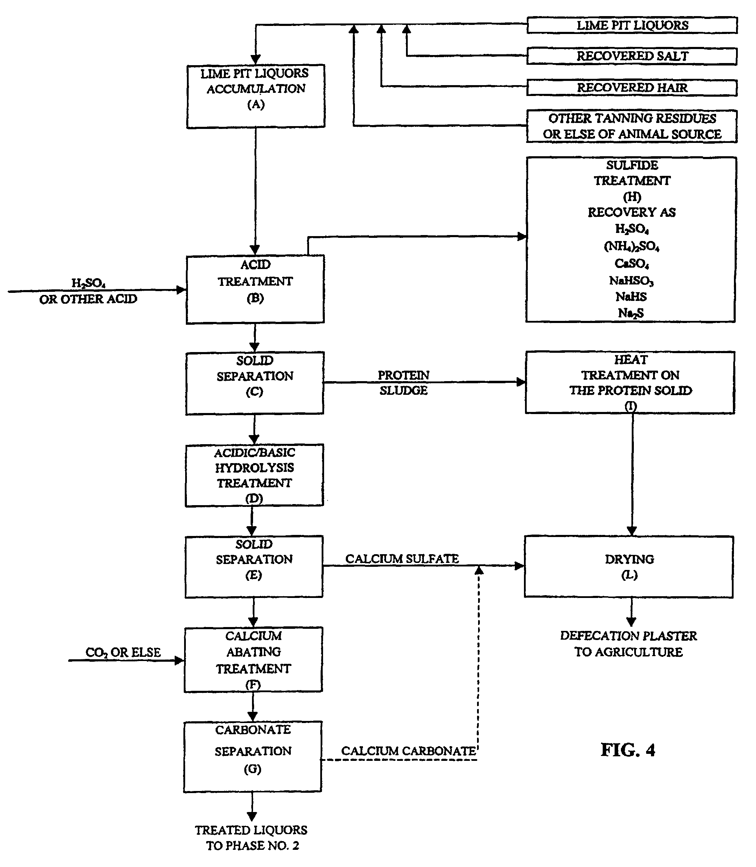

Fourth way to carry out the «stage 1» of the process. With reference to the block diagram in FIG. 4, the following sequential steps are illustrated:
a) accumulating the possibly admixed BDCs, with the salt recovered by hide beating or already present in the BDCs themselves in case the beating step can be avoided in the tanning plant, with the recovered hair that can already be present in the BDC themselves both dissolved or suspended, with other wastes of animal origin deriving from the tanning steps or possibly from other steps, even unrelated to the tanning industry (e.g. meat flours, etc.).
b) Acidically treating the BDCs, the BDCs are acidified with an amount of sulphuric acid or other sufficient to lower the pH to 3-6 (isoelectric point of the collagen proteins, that gelify while precipitating). The step lasts for a time required for the elimination of the sulphides present in the solution as hydrogen sulphide and it can be carried out under hot or cold conditions. The step can be completed with the injection of air or Nitrogen in order to completely develop as hydrogen sulphide the sulphides present in the solution (hot conditions are more expensive, however the subsequent solid separation step is greatly eased thereby)
c) Separating the solids, after the treatment of which at b) the acidic turbid is fed to a solid separation step (undissolved and gel protein, calcium sulphate, traces of undissolved hair, etc.), in which the protein liquor passes to the subsequent hydrolyzing treatment, whereas the separated solid is fed to a thermal sterilization process, of which at i).
d) Hydrolyzing treatment of the protein liquor, in which the liquor is fed to reactors in batches as well as continuously, where, casewise adding a further amount of acidic compound or an amount of an alkali compound sufficient to basify the liquor, a high temperature treatment under pressure is carried out (taking into account the existing laws in the field of the animal origin waste processing a 20 min 133°C 3 bar treatment can be envisaged; however, the hydrolysis process can possibly be carried out also at room temperature and not under pressure, lengthening the processing times thereof at will).
e) Separating the solids for a second time, after the hydrolysis treatment, the liquor or the turbid is fed to a solid separation step (calcium sulphate, etc.), in which the protein liquor passes to the subsequent decalcification treatment, whereas the separated solid is fed to a possible thermal drying process, of which at j).
f) Decalcifying the peptide liquor, the liquor yielded by the process e) is fed into specific reactors into which carbon dioxide or other carbonates o bicarbonates is added in order to obtain calcium carbonate, recoverable by itself or admixable to the previously obtained solids. This step can be carried out under hot as well as cold conditions.
g) Separating the calcium carbonate, the 5-11 pH (average 7-8) turbid is fed to separation step of the calcium carbonate that can be pressed and dried to be sold as such or admixed to the solid obtained by e) and then casewise pressed and/or dried and sold in the agricultural field as soil conditioner or additive. This solid can also have livestock and industrial uses. The decalcified peptide liquor is accumulated and it is ready for stage 2 of the process object of the invention herein disclosed.
h) Treating the hydrogen sulphide, the gaseous flow containing the hydrogen sulphide of which at b) is subjected to suitable treatments aimed at the recovery thereof as sulphuric acid, calcium sulphate, ammonium sulphide, sodium bisulphite, sodium sulphide or sodium sulphydrate, etc.
i) Thermally treating the protein solid, the protein solid yielded by c), casewise admixed to the other solids separated during the process steps, is subjected to a thermal sterilization treatment according to the existing provisions for the agricultural or industrial field (e.g., a 133°C treatment for 20 min under pressure).
j) Solid drying, the solids yielded by the thermal treatment process i), casewise admixed to the other solids separated during the process steps, are subsequently dried in order to obtain a stable product, salable in the agricultural or industrial field.

Description of the second stage, or «stage 2» of the process according to the invention:

To date, the art is aware of several recovery methods yielding a 80-100% pure sodium chloride and a hydrolyzed peptide that can be subsequently treated for the production of several finished products for the livestock, agricultural or industrial field, or utilized as such in the above-mentioned fields, or, lastly, utilized as alternative fuel for the production of steam or electric energy, recovering the salt contained therein or not.

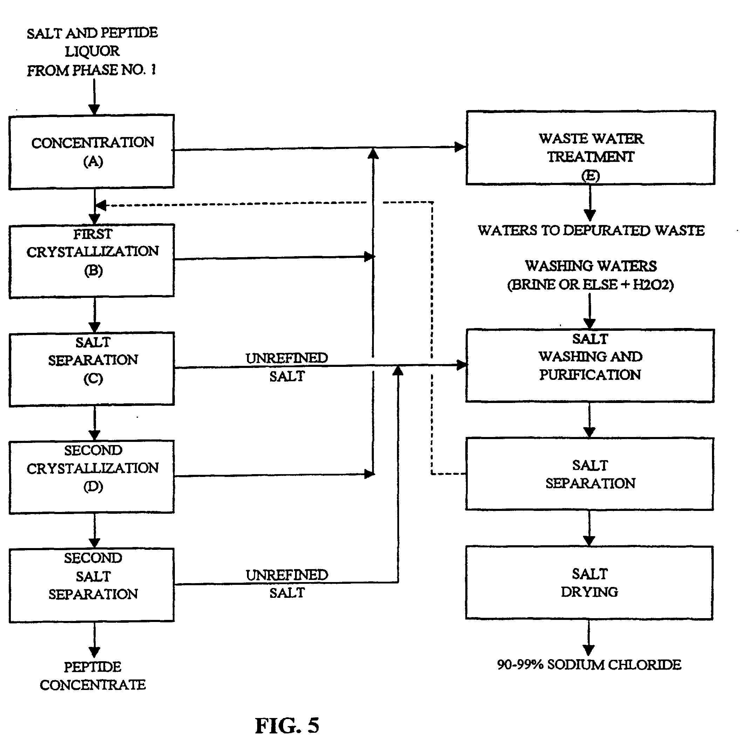

Hereinafter, the process that, applied to the saline peptide liquor obtained in stage 1, leads to the sodium chloride crystallization and purification and to the yield of the peptide concentrate, as shown in the diagrams of FIGS. 5-6.

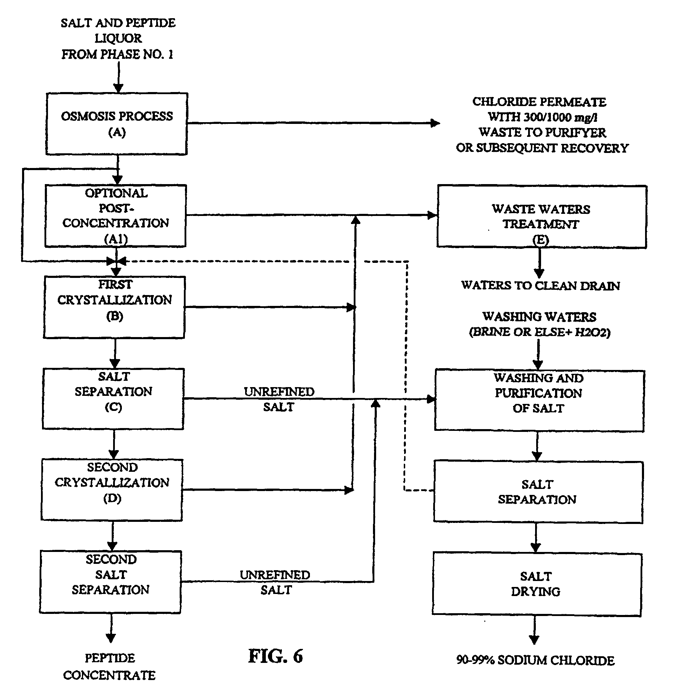

The saline liquor can be treated in an ultrafiltration and/or osmosis plant for pre-concentrating the saline phase, increasing its chloride concentration from about 30-35 g/l to about 45-55 g/l. The initial liquor is concentrated 1.5-2 times with the known techniques and the laboratory tests, then it can be delivered to a subsequent concentration and final crystallization step, or directly delivered to the crystallization step (cf. FIG. 6 Diagram). However, the salt cannot be entirely recovered by this system, as a portion thereof will remain in the permeate due to the ultrafiltration and/or osmosis step (on average, a waste liquor containing about 300-1000 mg/l chlorides, equal to 1/3 of the treated liquors, is obtained).

The peptide concentrate disclosed hereinafter could be utilized in a special liquid waste incinerator as alternative fuel for the production of steam, to be used in the steps of the above-disclosed process or in the evaporation stage; the salt yielded by the combustion process will again be water-dissolved and treated together with the BDCs.

The water drained from the evaporation and crystallization process will be treated in a special plant in order to allow the direct dumping thereof, complying with the limits set by the existing laws.

With reference to the block diagram of FIGS. 5-6, the following sequential steps are illustrated:
a) concentration, the saline peptide liquor could be pre-concentrated in a ultrafiltration and/or osmosis plant as already disclosed; the saline peptide liquor is pre-concentrated into a multi-effect concentrator that thermally or mechanically compresses the steam in order to optimize the cost of this step. Special care should be paid during the above-described process in order to avoid an excessive smearing or scaling of the main concentrator, arresting the former when a pre-concentrate still free of salt crystals is obtained. Apparently, such an evaporating step could also be carried out within a single apparatus, however the existing technology suggests to carry it out according to two separate substeps.
b) First crystallization, the pre-concentrate is fed to an evaporation crystallization plant (a cooling crystallization plant is conceivable, however the technology most suited to the material subjected to the process suggests to carry out the crystallization process by evaporation; a single crystallization process could be used, yielding a high-quality salt, having however an excessive content of final saline peptide concentrate: hence a double crystallization is suggested.
c) Separating the salt, the crystallized salt is separated from peptide concentrate by a centrifugation or a filtration process. The peptide concentrate can be sold as such or utilized as an alternative source of energy, e.g., for the production of steam, whereas the yielded salt is washed with a brine, in case additioned with oxidizers (e.g., hydrogen dioxide) to eliminate the residual sulphide traces in order to obtain the purified salt, that is then delivered to the drying and storing process. The brine is redelivered to the crystallization process for the salt and the peptide concentrate recovery.
d) Second crystallization, the peptide concentrate yielded by centrifuging or filtering the crystallized salt can be subjected to a second crystallization for a further salt recovery, thereby reducing the final peptide concentrate.
e) Purification of the drained liquors, the drained liquors derived from the evaporation and crystallization process are admixed and delivered to a purification plant for allowing the direct dumping thereof in compliance with the existing provisions. This purification plant consists of a stripping treatment of the solubilized ammonia, of a second treatment step with hydrogen dioxide or other oxidizer in order to eliminate the residual sulphide traces, finally percolating it through an activated charcoal layer, in order to reduce the COD within lawful limits. Various analyses carried out onto the liquors deriving from the concentration and crystallization process have assessed the above-described processes to amply suffice to make the waste liquors fall within lawful parameters.

### Application examples of the process of the invention

### Application example n. 1.

The application example 1 relates to a laboratory test.

10.000 g BDC were processed according to the process disclosed hereinafter, with the following analytical results:
- COD = 37.420 mg/l
- TKNf = 2.195 mg/l
- Sulphides = 3.109 mg/l
- Chlorides = 25.000 mg/l

About 2% b/w recovered salt and about 3% b/w recovered hair were added to this BDC (these percentages derive from an examination of the amounts of recovered salt and hair usually separable from the BDCs drained in the waste liquors of a tanning plant).

Apparently, this waste should be considered as a waste of animal origin, although extremely diluted in a water solution or suspension, because the partially dissolved or suspended protein is already classified as such; moreover, the end result of such steps is a peptide concentrate useful in the industrial, livestock and agricultural fields.

The process disclosed hereinafter results from the synergy of stage 1, carried out according to the steps shown in the diagram of FIG. 1 and stage 2, as shown in the diagram of FIG. 5.

200 g recovered salt and 300 g recovered hair were added to an amount equal to 10.000 g BDC drained from a tanning plant.

The suspension was subjected to a thermal hydrolysis treatment under pressure, at 150°C and at a pressure of about 5 bar for 30 min.

The treated suspension is cooled to about 80°C and vacuum-filtered by buchner.

The saline peptide liquor is treated, at 70°C, with gaseous carbon dioxide, in order to precipitate the calcium as calcium carbonate. The carbon dioxide scrubbing is carried out to pH 8.

Due to the pH decrease, the sulphides develop as hydrogen sulphide. In order to complete the development thereof, a pure Nitrogen scrubbing is carried out for 15 min after the carbon dioxide scrubbing (no recovery of the developed hydrogen sulphide was carried out)

The suspension thus obtained is vacuum-filtered by buchner.

The separated calcium carbonate is added to the solid separated during the first filtration.

Therefore, about 270 g dry solid are obtained. Then the saline peptide liquor is treated, according to what provided by stage 2. The saline peptide liquor is pre-concentrated and the first thermal crystallization is carried out by rotary evaporator (thermostatic bath temperature = 70°C, steam temperature about 40°C, vacuum equal to 75 cm Hg).

The pre-concentration is carried on until the concentrate assumes a honey-like texture (there are suspended sodium chloride crystals) and about 80% of the water is evaporated.

Then a first vacuum filtration is carried out by buchner.

The concentrate is further subjected to rotary evaporator crystallization until about 50% of the residual water is evaporated.

The vacuum filtration by buchner is repeated, and the raw salt yielded by the first filtration is admixed to that yielded by the second filtration.

The raw salt is purified by washings with a sodium chloride/hydrogen dioxide saturated brine.

Thus, about 560 g sodium chloride and about 400 g 60% dry peptide concentrate are obtained.

The liquors yielded from the analyzed concentration and crystallization steps had the following analytical values:
- COD = 112 mg/l
- TKN = 7 mg/l
- Chlorides = absent
- Sulphates = absent
- Sulphides < 1 mg/l

### Application example n. 2.

The application example n. 2 relates to a laboratory test.

10.000 g BDC were treated according to the process disclosed hereinafter, with the following analysis:
- COD = 40.520 mg/l
- TKNf = 1.670 mg/l
- Sulphides = 2.208 mg/l
- Chlorides = 39.500 mg/l

About 2% b/w recovered salt and about 3% b/w recovered hair were added to this BDC (these percentages derive from an examination of the amounts of recovered salt and hair that are usually separated from the BDCs drained in the waste liquors of a tanning plant).

Apparently, this waste should be considered as a waste of animal origin, although extremely diluted in a water solution or suspension, because the partially dissolved or suspended protein is already classified as such; moreover, the end result of such steps is a peptide concentrate useful in the industrial, livestock and agricultural fields.

The process disclosed hereinafter results from the synergy of stage 1, carried out according to the steps shown in the diagram of FIG. 1 and stage 2, as shown in the diagram of FIG. 5.

200 g recovered salt and 300 g recovered hair were added to an amount equal to 10.000 g BDC drained from a tanning plant.

The suspension was subjected to a thermal hydrolysis treatment under pressure, at 150°C and at a pressure of about 5 bar for 1 hour.

The treated suspension is cooled to about 85°C and vacuum-filtered by buchner.

The saline peptide liquor is treated, at 85°C, with sodium bicarbonate in order to precipitate the calcium as calcium carbonate.

The suspension thus obtained is vacuum-filtered by buchner.

The separated calcium carbonate is added to the solid separated in the first filtration.

Therefore, about 270 g dry solid are obtained.

Then, 37% hydrochloric acid is added to the saline peptide liquor, maintained at 85°C, until lowering the pH to about 7 (0.8% hydrochloric acid is utilized on the BDCs).

Due to the pH decrease, the sulphides develop as hydrogen sulphide. In order to ease the development thereof, a pure Nitrogen scrubbing is carried out for 30 min (no recovery of the developed hydrogen sulphide was carried out).

Then, the saline peptide liquor is treated according to what provided by stage 2. The saline peptide liquor is pre-concentrated and the first thermal crystallization is carried out by rotary evaporator (thermostatic bath temperature = 70°C, steam temperature = about 40°C, vacuum equal to 75 cm Hg).

The pre-concentration is carried on until the concentrate assumes a honey-like texture (there are suspended sodium chloride crystals) and about 80% of the water is evaporated.

Then a first vacuum filtration is carried out by buchner.

The concentrate is further subjected to a rotary evaporator crystallization until about 50% of the residual water is evaporated.

The vacuum filtration by buchner is repeated, and the raw salt yielded by the first filtration is admixed to that yielded by the second filtration.

The raw salt is purified by washings with a sodium chloride saturated brine.

Thus, about 500 g sodium chloride and about 380 g 60% dry peptide concentrate are obtained.

The liquors deriving from the analyzed concentration and crystallization steps had the following analytical values:
- COD = <10 mg/l
- TKN = 5 mg/l
- Chlorides = absent
- Sulphates = absent
- Sulphides < 1 mg/l

### Application example n. 3.

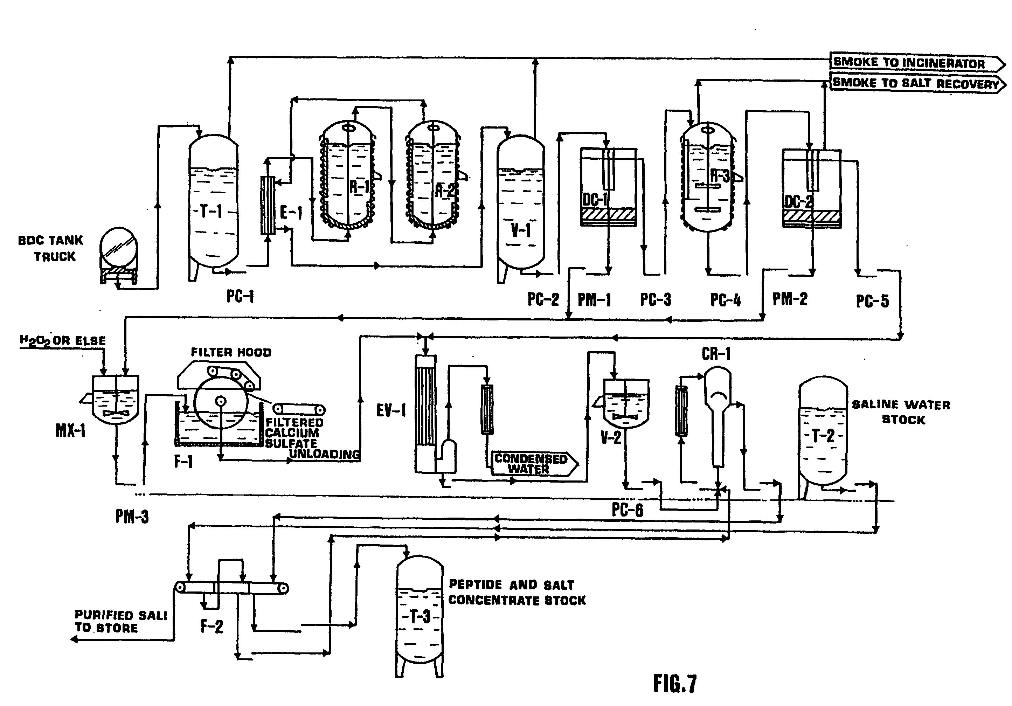

The process disclosed hereinafter, shown in the diagram of FIG. 7, results from the synergy of stage 1, carried out according to the steps shown in the diagram of FIG. 1 and stage 2, as shown in the diagram of FIG. 5.

Always in such process, reference is made to the processing of 1.000 t BDC with the addition of about 20 t recovered salt and about 30 t recovered hair (the BDC is delivered to the processing plants with suitable vehicles).

The entire suspended product is stored inside accumulation tanks T1, of a capacity allowing the BDC homogenizing and a storage thereof equal to 3 working days, so as to take into account possible plant maintenance steps. The BDCs are fed, with the process pump PC1, to the heat exchanger E1, inside which they are heated to about 100°C, carrying out a thermal recovery from the hydrolysis step under continuous pressure.

The heated BDCs are fed to the sequential reactors R1 and R2, allowing to carry out the hydrolysis process at 145°C, under a pressure of about 6 bar, for an average permanence time of about 30 min (these conditions allow a good alkaline hydrolysis of the dissolved and undissolved proteins like, e.g., the hair, as well as the thorough dissolving of the suspended salt).

The treated BDCs suspension is fed to the container V1, where the flash due to the expansion to atmospheric pressure takes place (an evaporation takes place at this stage and the resulting gases and the emitted steams are conveyed to the final incinerator plant).

The suspension is fed, with the process pump PC2, to the decanter DC1, in which the separation of the solid phase made of calcium sulphate and lime in excess with possible traces of proteins undissolved from the hydrolyzed peptide liquor takes place.

The peptide liquor is fed, with the process pump PC3, to the reactor R3, in which carbon dioxide is additioned, through a special bottom scrubber, at about 70-80°C. The carbon dioxide addition is controlled by the process pHmeter inserted in the reactor, and the process is considered to be over when the pH decreases from about 11 to about 8, in order not to develop soluble calcium bicarbonate.

Due to the carbon dioxide addition and to the pH decrease, the hydrogen sulphide develops from the reactor R3 (such hydrogen sulphide is further developed by a final hot air or steam scrubbing). This hydrogen sulphide is fed to a combustion plant, inside which it is transformed into sulphur dioxide, that is then absorbed in a specific absorption tower with calcium carbonate; then the yielded calcium sulphite is oxidized to calcium sulphate by air and/or oxygen scrubbing.

About 14 t 70% dry calcium sulphate (that can be admixed to the subsequently filtered solids, or sold as chemical plaster to companies utilizing such materials) are yielded by this process. Anyhow, the flue gases of the sulphide recovery plant are delivered to the final incineration plant.

After the combustion process leading to SO2 formation, such gaseous flow can also be fed to a sulphuric acid production plant, obtaining a product that can easily be sold or treated in other sulphates or sulphites production plants.

The peptide liquor containing the calcium carbonate is fed, with the process pump PC4, to the decanter DC2, where the calcium carbonate is separated from the saline peptide liquor.

The solid inlet by the decanter DC1 through the pump PM1 and the solid inlet by the decanter DC2 through the pump PM2 are delivered to a mixer MX1, hydrogen dioxide being fed therein in order to oxidize to calcium sulphate the residual sulphides. From this mixer, through the pump PM3, the suspension containing about 25% dry matter is delivered to a press filter F1, yielding a saline peptide liquor that is redelivered to the decanter DC2, and a solid, having about 70% dry matter, that is directly sold to the companies operating in the agricultural field. (The yielded dry solid equals about 35 t, having approximately 15% SO3, 20% CaO, 1.5% Norg, therefore constituting a satisfactory clarification plaster, salable as soil conditioner in the agricultural field.

The saline peptide liquor inlet from the process pump PC5 is fed to a five-effect thermally compressed evaporation plant EV1. Therein, the about 950 t of initial liquor with a dry content equal to about 8.5-9.0% is brought to the sodium chloride crystallization start, and therefore to about 40% of the dry content (thus, a water amount equal to about 700-750 t is evaporated, with a steam consumption equal to about 6.5-7.0 t/hour.

The pre-concentrate is fed to the accumulation tank V2, and therefrom it is fed to the crystallization plant CR1, through the pump PC6. This plant is of the forced-circulation type, with steam thermal compression for the thermal recovery within the heat exchanger of the plant itself.

The crystallized suspension is directly fed to the ribbon filter F2 for the separation step of the saline peptide concentrate, that is accumulated in the tank T3 (yield = about 50 t) and then sold in the livestock, agricultural or industrial field, from the crystallized salt, that is washed counter-current with a saturated sodium chloride solution previously prepared and stored in the tank T2. The saline washing liquors are directly delivered to the crystallization plant CR1.

The crystallized and purified salt is finally dried inside the final section of the same ribbon filter, yielding about 55 t dry salt of 93-98% pureness, directly reusable in the tanning plants.

### Application example n. 4.

The application example n. 4 relates to a laboratory test.

10.000 g of liauors deriving from fish processing (like, e.g., tuna, anchovies offal, etc.), hereinafter referred to as ALP, were processed according to the process hereinafter disclosed, with the following analytical values:
- COD = 27.995 mg/l
- TKN_{f} = 2.500 mg/l
- Chlorides = 62.100 mg/l

The final result of the purification steps of these liquors is a peptide concentrate useful in the industrial, livestock and agricultural fields, or possibly as an alternative fuel for the production of steam to be used within the process itself.

The process disclosed hereinafter results from the synergy of stage 1, carried out according to the steps shown in the diagram di FIG. 1 (due to the lack of sulphur ions in the ALP no acidic treatment of the peptide liquor is carried out) and stage 2, as shown in the diagram of fig. 6.

An amount equal to 10.000 g ALP drained from a tuna processing plant, additioned with 400 g hydrated lime, was subjected to a thermal hydrolysis treatment under pressure at 145°C and under a pressure of about 4 bar for 1 hour.

The treated suspension is cooled to about 85°C and vacuum-filtered by buchner.

The saline peptide liquor is treated, at 85°C, with controlled pH carbon dioxide, in order to precipitate the calcium as calcium carbonate.

The suspension thus obtained is vacuum-filtered by buchner.

The separated calcium carbonate is added to the solid separated in the first filtration.

Thus, about 540 g dry solid are obtained.

Then, the saline peptide liquor is treated according to what provided by stage 2. The saline peptide liquor is pre-concentrated and the first thermal crystallization is carried out by rotary evaporator (thermostatic bath temperature = 70°C, steam temperature about 40°C, vacuum equal to 75 cm Hg).

The pre-concentration is carried on until the concentrate assumes a honey-like texture (there are suspended sodium chloride crystals) and about 80% of the water is evaporated.

Then a first vacuum filtration is carried out by buchner.

The concentrate is further subjected to rotary evaporator crystallization until about 50% of the residual water is evaporated.

The vacuum filtration by buchner is repeated, and the raw salt yielded by the first filtration is admixed to that yielded by the second filtration.

The raw salt is purified by washings with a sodium chloride saturated brine. Thus, about 600 g sodium chloride and about 320 g 60% dry peptide concentrate are obtained.

The liquors deriving from the analyzed concentration and crystallization steps had the following analytical values:
- COD = <10 mg/l
- TKN = 8 mg/l
- Chlorides = absent

Then the peptide concentrate is demineralized by percolating it through ion exchange resins. In order to be demineralized, the peptide concentrate is first diluted into 320 g water to obtain a dry matter concentration equal to the 30 %. The yielded liquor is percolated through ultrafiltration membranes (thus resulting further diluted until having a dry matter content equal to about the 20%) and then through a cathode exchange column and through an anionic exchange column. Then, the demineralized peptide liquor is concentrated again. About 210 g final concentrate are obtained, characterized by an organic nitrogen content equal to 8.5%, a dry matter content equal to 60% and absence of ashes. This concentrate is of high value, salable in the industrial, agricultural and livestock fields.

### Applicative example n. 5.

The applicative example n.5 relates to a laboratory test.

10.000 g of liquors deriving from the processing of mammal butchery residues for the production of meat flours (hereinafter referred to as AFCs) were processed according to the process disclosed hereinafter, with the following analytical values:
- COD = 35.300 mg/l
- TKN_{f} = 5.500 mg/l
- Chlorides = 27.000 mg/l

The end result of the processing steps of these liquors is a peptide concentrate useful in the industrial, livestock and agricultural fields, or as alternative fuel for the production of steam to be used within the process itself.

The process disclosed hereinafter results from the synergy of stage 1, carried out according to the steps shown in the diagram of FIG. 1 (stage (C) is not carried out: a single solid separation (E) is carried out after the calcium abatement treatment (D)) and stage 2, as disclosed in the diagram of FIG. 5.

An amount equal to 10.000 g AFC drained from a meat flour production plant, additioned with 400 g hydrated lime, was subjected to a thermal hydrolysis treatment under pressure at 145°C and under about 4 bar for 1 hour.

The treated suspension is cooled to about 85°C and it is treated with controlled pH carbon dioxide, in order to precipitate the calcium as calcium carbonate.

The suspension thus obtained is vacuum-filtered by buchner. About 450 g dry solid matter are obtained.

Then the saline peptide liquor is treated, according to what provided in stage 2. The saline peptide liquor is pre-concentrated and the first thermal crystallization is carried out by rotary evaporator (thermostatic bath temperature 70°C, steam temperature about 40°C, vacuum equal to 75 cm Hg).

The pre-concentration is carried out until the concentrate assumes a honey-like texture (there are suspended sodium chloride crystals) and about 80% of the water is evaporated.

Then a first vacuum filtration is carried out by buchner.

The concentrate is further subjected to rotary evaporator crystallization until about 50% of the residual water is evaporated.

The vacuum filtration by buchner is repeated, and the raw salt yielded by the first filtration is admixed to that yielded by the second filtration.

The raw salt is purified by washings with a sodium chloride saturated brine. Thus, about 450 g sodium chloride and about 400 g, 65% dry, peptide concentrate are obtained.

The liquors deriving from the concentration and crystallization steps had the following analytical values:
- COD = <10 mg/l
- TKN = 6 mg/l
- Chlorides = absent

### Industrial applicability

From what has hereto been disclosed, it is apparent how the object of the invention was fully attained where, operating synergistically, the exclusion from the chemical-physical and biological purification treatments was attained for the BDCs or the analogous organic matter saline baths of a substantially protein nature, also obtaining a cost-effective recovery due to the production of recyclable end products, as well as drastically eliminating materials that are highly polluting and often hindering the biological purification process of the liquors, above all with reference to the high chlorides content.

In particular, with reference to the BDCs, the beneficial effects of the process according to the invention can be summed up as:
1. Remarkable reduction of the pollution load in terms of COD in the waste liquors fed to the biological treatment plant (such a load reduction is estimated to be equal to about the 15-20%), with the entailed reduction in sludge production;
2. Considerable sulphides reduction of the in the waste liquors fed to the biological treatment plant, with drastic reduction of the odors emitted from the plant itself and of the sulphates in the waste liquors and improvement of the sludge filtration steps
3. Remarkable chlorides reduction in the waste liquors of the biological plant (a chloride ion reduction of about 20-40% can be estimated).
4. Possibility to sensibly improve the management of the biological plant itself, taking into account the lighter pollutant load and above all the absence of compounds, present in the BDCs, that are potentially toxic to the biological plant.

Even in case of treating of liquors other than the BDCs (e.g., ALPs or AFCs) benefits for the purification plant are obtained, such as a lighter chloride ion concentration in the purified liquors, and a reduced organic load, entailing a reduced sludge production.

## Claims

1. A process for recovering NaCl and transforming an environmentally non-disposable solid or liquid waste into an environmentally disposable waste, in the treatment of a material of animal origin, which produces said non-disposable waste containing protein products of animal origin and products of saline nature,
**characterized in that** said products of saline nature comprise water, NaCl, CaO and sulphides and **in that** it comprises a first stage including the steps of:
hydrolyzing said protein products in order to obtain a saline peptide liquor; transforming CaO into CaCO₃ and sulfides into solid sulfur compounds and separating said solids to purify said saline peptide liquor; and
a second stage subsequent to said first stage, including the steps of:
removing water from said purified saline liquor to form a liquid waste; and
separating purified sodium chloride as an industrially useful product from said peptide liquor, and obtaining a useful or combustible peptide by product
whereby, after said two consecutive treatment stages, said liquid waste shows a residual pollutant content low enough to be delivered to a standard purification plant, or directly to a dumping site.

2. The process according to claim 1, wherein in said second stage said peptide by product is recovered as a dried solid, or as a peptide concentrate useful in agriculture, livestock and industry, or as a fuel.

3. The process, according to claim 1 or 2, wherein said solid or liquid wastes are drained from lime pits (BDCs).

4. The process, according to claim 1 or 2, wherein said solid or liquid wastes derive from steps related to the hide tanning field, from the concomitant BDC treatment, from salts yielded by hide beating, or from hair undissolved by the lime bath.

5. The process according to claim 1 or 2, wherein said solid or liquid wastes derive from the processing of mammal butchery residues, fleshing or meat flours.

6. The process according to claim 1 or 2, wherein said solid or liquid wastes derive from fish or fish flour products processing.

7. The process according to any one of the preceding claims, wherein said first treatment stage comprises the steps of:
accumulating said protein products of animal origin in an aqueous saline suspension;
hydrolyzing said suspension, continuously or in batches, in a markedly alkali environment with a temperature ranging from room temperature under atmospheric pressure, to 160°C under pressure in order to obtain said peptide liquor;
separating the solids contained in said liquor;
decalcifying said liquor by reaction with carbon dioxide or other carbonates or bicarbonates in order to produce calcium carbonate; and
separating the calcium carbonate from said liquor of pH from 5 to 11,
in order to obtain a limpid peptide to feed to said second stage.

8. The process according to claim 7, wherein said calcium carbonate obtained in decalcifying step is used as soil conditioner or additive in agriculture.

9. The process according to claim 7 or 8, wherein in said decalcifying step of said liquor an acid is added in order to lower the pH between 5 and 8, air or Nitrogen is injected to convert the sulphides present in the solution to hydrogen sulphide and the gaseous flow is treated in order to convert the hydrogen sulphide to sulphuric acid, calcium sulphate, ammonium sulphide, sodium bisulphite, sodium sulphide or sodium sulphydrate for the recovery and the reuse of said compounds.

10. The process according to claim 7 or 8, wherein after said hydrolyzing step the alkaline suspension is acidified to a pH ranging from 0 to 6 for converting the sulphides present in the solution to hydrogen sulphide, and an oxide or earthy alkali hydroxide is added in order to precipitate as a salt the previously added acid.

11. The process according to claim 10 wherein sulphuric acid is added in order to acidify the suspension, and calcium oxide or hydroxide in order to precipitate the calcium sulphate.

12. The process according to claim 7 or 8, wherein after the accumulation of said protein products and prior to the hydrolyzing, the sulphides present in the solution are oxidized to thiosulphates and/or sulphates by means of a strong oxidizer, in case using a catalyst.

13. The process according to claim 7 or 8, wherein after the accumulation of said protein products and prior to the hydrolyzing step, the saline aqueous suspension is acidified to a pH of 3 to 6 in order to precipitate a gel of collagen proteins and to eliminate the sulphides, the solids thus obtained are separated prior to the hydrolyzing step and are subjected to a thermal sterilization treatment to be used in the agricultural and industrial fields.

14. The process according to claim 13, wherein said saline aqueous suspension is acidified with sulphuric acid.

15. The process, according to any one of the preceding claims, wherein said second stage comprises the steps of: concentrating said saline peptide liquor by evaporating an amount of the solution water such that a pre-concentrate is obtained in which the salt concentration does not exceed that obtained at the start of the crystallisation; crystallizing the salt by further eliminating the solution water from said peptide liquor; and separating the crystallized salt from the peptide liquor in order to obtain said salt and said peptide concentrate.

16. The process, according to claim 15, wherein prior to the concentrating step, or in lieu thereof, a saline liquor pre-concentration step is carried out by osmosis in order to increase the salt concentration in the starting liquor of from about 1.5 to 2 times.

17. The process according to claim 15 or 16, wherein said concentrating step is carried out by evaporating or cooling the solution water.

18. The process, according to any one of the claims 15 to 17, wherein said separation step of the crystallized salt from the peptide liquor is carried out by filtration or centrifugation.

19. The process, according to any one of the claims 15 to 17, wherein said peptide concentrate is subjected to a second crystallisation step in order to obtain a lower salt concentration in the final peptide concentrate.

20. The process, according to any one of the claims 15 to 19, wherein said separated crystallized salt is washed with a saturated brine in order to obtain a purified sodium chloride salt.

21. The process, according to any one of the claims 15 to 20, wherein said brine is additioned with oxidizing agents in order to eliminate existing sulphide traces.

22. The process, according to any one of the claims 15 to 21, wherein said osmosis or concentration and crystallisation steps can be carried out within a single recovery step, with or without sodium chloride purification

23. The process according to any one of the preceding claims, wherein said waste liquors deriving from the evaporation and crystallisation steps are purified in a purification plant comprising an ammonia stripping treatment, a treatment with oxidizing agents in order to eliminate residual sulphides, and a percolation through an active surface material.

## Patentansprüche

1. Verfahren zum Rückgewinnen von NaCl und Umwandeln eines in der Umwelt nicht ablagerungsfähigen festen oder flüssigen Abfalls in einen in der Umwelt ablagerungsfähigen Abfall, bei der Behandlung eines Materials tierischer Herkunft, welche diesen nicht ablagerungsfähigen Abfall erzeugt, welcher Proteinprodukte tierischer Herkunft und Produkte mit salzhaltiger Beschaffenheit enthält,
**dadurch gekennzeichnet, dass** die Produkte mit salzhaltiger Beschaffenheit Wasser, NaCl, CaO und Sulfide umfassen und dass es eine erste Stufe umfasst, welche die Schritte einschließt:
Hydrolysieren der Proteinprodukte, um eine salzhaltige Peptidflüssigkeit zu erhalten; Umwandeln von CaO in CaCO₃ und von Sulfiden in feste Schwefelverbindungen und Abtrennen der Feststoffe, um die salzhaltige Peptidflüssigkeit zu reinigen; und
eine zweite Stufe im Anschluss an die erste Stufe umfasst, welche die Schritte einschließt:
Entfernen von Wasser aus der gereinigten salzhaltigen Flüssigkeit, um einen flüssigen Abfall zu bilden; und
Abtrennen von gereinigtem Natriumchlorid als technisch brauchbares Produkt von der Peptidflüssigkeit und Erhalten eines brauchbaren oder verbrennbaren Peptid-Nebenprodukts,
wobei nach den zwei aufeinanderfolgenden Behandlungsstufen der flüssige Abfall einen Restschadstoffgehalt aufweist, der niedrig genug ist, um zu einer normalen Kläranlage oder direkt zu einer Deponie gebracht zu werden.

2. Verfahren nach Anspruch 1, wobei in der zweiten Stufe das Peptid-Nebenprodukt als getrockneter Feststoff oder als Peptidkonzentrat, das in der Landwirtschaft, Tierhaltung und Industrie brauchbar ist, oder als Brennstoff zurückgewonnen wird.

3. Verfahren nach Anspruch 1 oder 2, wobei die festen oder flüssigen Abfälle aus Kalkgruben (BDCs) abgelassen werden.

4. Verfahren nach Anspruch 1 oder 2, wobei die festen oder flüssigen Abfälle von Schritten, die mit dem Gebiet der Gerbung von Tierhäuten zusammenhängen, von der damit einhergehenden BDC-Behandlung, von Salzen, die durch das Bearbeiten (Aufschlagen, Walken) der Häute hervorgebracht werden, oder von Haaren, die durch das Kalkbad nicht aufgelöst werden, herrühren.

5. Verfahren nach Anspruch 1 oder 2, wobei die festen oder flüssigen Abfälle von der Verarbeitung von Säugetier-Schlachtrückständen, Entfleischungsmaterial oder Fleischmehlen herrühren.

6. Verfahren nach Anspruch 1 oder 2, wobei die festen oder flüssigen Abfälle von der Verarbeitung von Fischen oder Fischmehlprodukten herrühren.

7. Verfahren nach einem der vorangehenden Ansprüche, wobei die erste Behandlungsstufe die Schritte umfasst:
Ansammeln der Proteinprodukte tierischer Herkunft in einer wässrigen salzhaltigen Suspension;
Hydrolysieren der Suspension, kontinuierlich oder diskontinuierlich, in einer ausgeprägt alkalischen Umgebung mit einer Temperatur im Bereich von Raumtemperatur unter Atmosphärendruck bis 160°C unter Druck, um die Peptidflüssigkeit zu erhalten;
Abtrennen der in der Flüssigkeit enthaltenen Feststoffe;
Entziehen des Calciums bzw. Entkalken der Flüssigkeit durch Reaktion mit Kohlendioxid oder anderen Carbonaten oder Hydrogencarbonaten, um Caiciumcarbonat herzustellen; und
Abtrennen des Calciumcarbonats von der Flüssigkeit mit einem pH von 5 bis 11,
um ein klares Peptid zum Einspeisen in die zweite Stufe zu erhalten.

8. Verfahren nach Anspruch 7, wobei das in dem Entkalkungsschritt erhaltene Calciumcarbonat als Bodenverbesserungsmittel oder Additiv in der Landwirtschaft verwendet wird.

9. Verfahren nach Anspruch 7 oder 8, wobei bei dem Entkalkungsschritt der Flüssigkeit eine Säure zugegeben wird, um den pH auf einen Wert zwischen 5 und 8 abzusenken, Luft oder Stickstoff injiziert wird, um die in der Lösung vorhandenen Sulfide in Schwefelwasserstoff umzuwandeln, und der Gasstrom behandelt wird, um den Schwefelwasserstoff in Schwefelsäure, Calciumsulfat, Ammoniumsulfid, Natriumhydrogensulfit, Natriumsulfid oder Natriumsulfhydrat für die Rückgewinnung und die Wiederverwendung dieser Verbindungen umzuwandeln.

10. Verfahren nach Anspruch 7 oder 8, wobei nach dem Hydrolysierungsschritt die alkalische Suspension auf einen pH im Bereich von 0 bis 6 angesäuert wird, um die in der Lösung vorhandenen Sulfide in Schwefelwasserstoff umzuwandeln, und ein Oxid oder Erdalkalihydroxid zugegeben wird, um die zuvor zugegebene Säure als Salz auszufällen.

11. Verfahren nach Anspruch 10, wobei Schwefelsäure zugegeben wird, um die Suspension anzusäuern, und Calciumoxid oder -hydroxid zugegeben wird, um das Calciumsulfat auszufällen.

12. Verfahren nach Anspruch 7 oder 8, wobei nach der Ansammlung der Proteinprodukte und vor dem Hydrolysieren die in der Lösung vorhandenen Sulfide mittels eines starken Oxidationsmittels zu Thiosulfaten und/oder Sulfaten oxidiert werden, wobei gegebenenfalls ein Katalysator verwendet wird.

13. Verfahren nach Anspruch 7 oder 8, wobei nach der Ansammlung der Proteinprodukte und vor dem Hydrolysierungsschritt die salzhaltige wässrige Suspension auf einen pH von 3 bis 6 angesäuert wird, um ein Gel aus Kollagenproteinen auszufällen und um die Sulfide zu beseitigen, die so erhaltenen Feststoffe vor dem Hydrolysierungsschritt abgetrennt werden und einer thermischen Sterilisationsbehandlung unterzogen werden, um auf landwirtschaftlichem und industriellem Gebiet verwendet zu werden.

14. Verfahren nach Anspruch 13, wobei die salzhaltige wässrige Suspension mit Schwefelsäure angesäuert wird.

15. Verfahren nach einem der vorangehenden Ansprüche, wobei die zweite Stufe die folgenden Schritte umfasst:
Konzentrieren der salzhaltigen Peptidflüssigkeit durch Verdampfen einer Menge des Lösungswassers, so dass ein Vorkonzentrat erhalten wird, in welchem die Salzkonzentration nicht die Konzentration übersteigt, die zu Beginn der Kristallisation erhalten wird; Kristallisieren des Salzes durch weiteres Entfernen des Lösungswassers aus der Peptidflüssigkeit; und Abtrennen des kristallisierten Salzes von der Peptidflüssigkeit, um das Salz und das Peptidkonzentrat zu erhalten.

16. Verfahren nach Anspruch 15, wobei vor dem Konzentrierungsschritt oder anstelle dessen ein Vorkonzentrierungsschritt der salzhaltigen Flüssigkeit durch Osmose durchgeführt wird, um die Salzkonzentration in der Ausgangsflüssigkeit um das ungefähr 1,5- bis 2-fache zu erhöhen.

17. Verfahren nach Anspruch 15 oder 16, wobei der Konzentrierungsschritt durch Verdampfen oder Kühlen des Lösungswassers ausgeführt wird.

18. Verfahren nach einem der Ansprüche 15 bis 17, wobei der Schritt der Abtrennung des kristallisierten Salzes von der Peptidflüssigkeit durch Filtration oder Zentrifugation ausgeführt wird.

19. Verfahren nach einem der Ansprüche 15 bis 17, wobei das Peptidkonzentrat einem zweiten Kristallisierungsschritt unterzogen wird, um eine niedrigere Salzkonzentration in dem Peptid-Endkonzentrat zu erhalten.

20. Verfahren nach einem der Ansprüche 15 bis 19, wobei das abgetrennte kristallisierte Salz mit einer gesättigten Salzlösung gewaschen wird, um ein gereinigtes Natriumchloridsalz zu erhalten.

21. Verfahren nach einem der Ansprüche 15 bis 20, wobei die Salzlösung mit Oxidationsmitteln versetzt wird, um vorhandene Sulfidspuren zu beseitigen.

22. Verfahren nach einem der Ansprüche 15 bis 21, wobei die Osmose- oder Konzentrierungs- und Kristallisierungsschritte in einem einzigen Rückgewinnungsschritt mit oder ohne Natriumchloridreinigung durchgeführt werden können.

23. Verfahren nach einem der vorangehenden Ansprüche, wobei die Abfallflüssigkeiten, die von den Verdampfungs- und Kristallisierungsschritten herrühren, in einer Kläranlage gereinigt werden, die eine Ammoniakaustreibungsbehandlung, eine Behandlung mit Oxidationsmitteln zum Beseitigen von Sulfidrückständen und eine Perkolation durch ein Material mit aktiver Oberfläche umfasst.

## Revendications

1. Procédé de récupération de NaCl et de transformation de déchets solides ou liquides ne pouvant pas être rejetés dans l'environnement en déchets pouvant être rejetés dans l'environnement, dans le traitement d'uns matière d'origine animale qui produit lesdits déchets ne pouvant pas être rejetés et contenant des produits protéiniques d'origine animale et des produits de nature saline,
**caractérisé en ce que** lesdits produits de nature saline comprennent de l'eau, du NaCl, du CaO et des sulfures et **en ce qu'**il comprend
un premier stade comprenant les étapes selon lesquelles on hydrolyse lesdits produits protéiniques pour obtenir une liqueur peptidique saline; on transforme CaO en CaCO₃ et les sulfures en composée du soufre solides et on sépare lesdits solides pour purifier ladite liqueur peptidique saline;
et un deuxième stade qui suit ledit premier stade, et qui comprend les étapes selon lesquelles on sépare l'eau de ladite liqueur saline purifiée pour former des déchets liquides; et on sépare du chlorure de sodium purifié sous forme de produit utile industriellement de ladite liqueur peptidique, et on obtient un sous-produit peptidique utile ou combustible;
grâce à quoi, après ces deux stades de traitement consécutifs, lesdits déchets liquides présentent une teneur en polluants résiduelle assez basse pour être envoyés dans une usine de purification classique ou directement dans une décharge.

2. Procédé selon la revendication 1, dans lequel, dans ledit deuxième stade, on récupère ledit sous-produit peptidique sous forme d'un solide séché ou sous forme d'un concentré peptidique utile dans l'agriculture, l'élevage et l'industrie, ou comme combustible.

3. Procédé selon la revendication 1 ou 2, dans lequel lesdits déchets solides ou liquides proviennent de la vidange de cuves de pelanage (BDC).

4. Procédé selon la revendication 1 ou 2, dans lequel lesdits déchets solides ou liquides proviennent d'étapes se rapportant au domaine du tannage du cuir, du traitement BDC concomitant, de sels produits par le secouage des peaux ou de poils non dissous par le bain de pelain.

5. Procédé selon la revendication 1 ou 2, dans lequel lesdits déchets solides ou liquides proviennent du traitement de résidus de boucherie de mammifères, de l'échamage ou de farines de viandes.

6. Procédé selon la revendication 1 ou 2, dans lequel lesdits déchets solides ou liquides proviennent du traitement de produits de poissons ou de farines de poisson.

7. Procédé selon l'une quelconque des revendications précédentes, dans lequel ledit premier stade de traitement comprend les étapes selon lesquelles:
on accumule lesdits produits protéiniques d'origine animale dans une suspension saline aqueuse;
on hydrolyse ladite suspension, de façon continue ou discontinue, dans des conditions nettement basiques à une température comprise entre la température ambiante sous la pression atmosphérique et 160°C sous pression pour obtenir ladite liqueur peptidique;
on sépare les produits solides contenus dans ladite liqueur;
on décalcifie ladite liqueur en la faisant réagir avec du dioxyde de carbone ou d'autres carbonates ou bicarbonates pour produire du carbonate de calcium; et
on sépare le carbonate de calcium de ladite liqueur à un pH de 5 à 11,
pour obtenir un peptide limpide à amener dans ledit deuxième stade.

8. Procédé selon la revendication 7, dans lequel ledit carbonate de calcium obtenu dans l'étape de décalcification est utilisé comme améliorant de la terre ou comme additif en agriculture.

9. Procédé selon la revendication 7 ou 8, dans lequel, dans ladite étape de décalcification de ladite liqueur, on ajoute un acide pour abaisser le pH entre 5 et 8, on injecte de l'air ou de l'azote pour transformer les sulfures présents dans la solution en sulfure d'hydrogène et on traite le courant gazeux pour transformer le sulfure d'hydrogène en acide sulfurique, sulfate de calcium, sulfure d'ammonium, bisulfite de sodium, sulfure de sodium ou sulfhydrate de sodium afin de récupérer et de réutiliser ces composés.

10. Procédé selon la revendication 7 ou 8, dans lequel, après ladite étape d'hydrolyse, on acidifie la suspension basique à un pH compris entre 0 et 6 pour transformer les sulfures présents dans la solution en sulfure d'hydrogène, et on ajoute un oxyde ou un hydroxyde de métal alcalino-terreux pour précipiter sous forme d'un sel l'acide précédemment ajouté.

11. Procédé selon la revendication 10, dans lequel on ajoute de l'acide sulfurique pour acidifier la suspension, et de l'oxyde ou de l'hydroxyde de calcium pour précipiter le sulfate de calcium.

12. Procédé selon la revendication 7 ou 8, dans lequel, après l'accumulation desdits produits protéiniques et avant l'hydrolyse, on oxyde les sulfures présents dans la solution en thiosulfates et/ou sulfates à l'aide d'un oxydant fort, en utilisant un catalyseur le cas échéant.

13. Procédé selon la revendication 7 ou 8, dans lequel, après l'accumulation desdits produits protéiniques et avant l'hydrolyse, on acidifie la suspension aqueuse saline à un pH de 3 à 6 pour précipiter un gel de protéines de collagène et éliminer les sulfures, on sépare les solides ainsi obtenus avant l'étape d'hydrolyse et on les soumet à un traitement thermique de stérilisation pour les utiliser dans les domaines agricole et industriel.

14. Procédé selon la revendication 13, dans lequel on acidifie ladite suspension aqueuse saline avec de l'acide sulfurique.

15. Procédé selon l'une quelconque des revendications précédentes, dans lequel ledit deuxième stade comprend les étapes selon lesquelles on concentre ladite liqueur peptidique saline en évaporant une quantité d'eau de la solution telle que l'on obtient un pré-concentré dans lequel la concentration de sel ne dépasse pas celle obtenue au départ de la cristallisation; on cristallise le sel en continuant à éliminer l'eau de la solution de ladite liqueur peptidique; et on sépare le sel cristallisé de la liqueur peptidique pour obtenir ledit sel et ledit concentré peptidique.

16. Procédé selon la revendication 15, dans lequel, avant l'étape de concentration ou à sa place, on effectue une étape de concentration préalable de la liqueur saline par osmose pour augmenter d'environ 1,5 à 2 fois la concentration de sel dans la liqueur de départ.

17. Procédé selon la revendication 15 ou 16, dans lequel ladite étape de concentration s'effectue par évaporation ou refroidissement de l'eau de la solution.

18. Procédé selon l'une quelconque des revendications 15 à 17, dans lequel ladite étape de séparation du sel cristallisé de la liqueur peptidique s'effectue par filtration ou centrifugation.

19. Procédé selon l'une quelconque des revendications 15 à 17, dans lequel on soumet ledit concentré peptidique à une deuxième étape de cristallisation pour obtenir une concentration de sel plus basse dans le concentré peptidique final.

20. Procédé selon l'une quelconque des revendications 15 à 19, dans lequel on lave ledit sel cristallisé séparé avec une saumure saturée pour obtenir un sel chlorure de sodium purifié.

21. Procédé selon l'une quelconque des revendications 15 à 20, dans lequel on ajoute à ladite saumure des agents oxydants pour éliminer les traces de sulfures existantes.

22. Procédé selon l'une quelconque des revendications 15 à 21, dans lequel on peut effectuer lesdites étapes d'osmose ou de concentration et de cristallisation en une seule étape de récupération, avec ou sans purification du chlorure de sodium.

23. Procédé selon l'une quelconque des revendications précédentes, dans lequel on purifie lesdites liqueurs résiduaires provenant des étapes d'évaporation et de cristallisation dans une usine de purification comprenant un traitement d'extraction d'ammoniac, un traitement avec des agents oxydants pour éliminer les sulfures résiduels, et une percolation à travers un produit tensioactif.
